# EUROPEAN PATENT SPECIFICATION

(11) **EP 3 168 416 B1**
(45) Date of publication and mention of the grant of the patent: **09.01.2019**
(21) Application number: 16197802.8
(22) Date of filing: 08.11.2016
(51) Int. Cl.: F01D 5/14, F01D 25/30

(54) **GAS TURBINE**
GASTURBINE
TURBINE À GAZ

(30) Priority: 11.11.2015 US 201514937992
(43) Date of publication of application: 17.05.2017
(73) Proprietor: General Electric Company, Schenectady, NY 12345 (US)
(72) Inventor: BHAUMIK, Soumyik Kumar, 560066 Bangalore, Karnataka (IN); SIDEN, Gunnar Leif, Greenville, SC 29615 (US); NANDA, Deepesh Dinesh, 560066 Bangalore, Karnataka (IN); CHOUHAN, Rohit, 560066 Bangalore, Karnataka (IN)
(74) Representative: Lee, Brenda

(56) References cited:
- EP-A1- 0 528 138
- WO-A1-2014/156961
- US-A1- 2012 045 324
- US-A1- 2012 102 956

## Description

### BACKGROUND

The subject matter disclosed herein relates generally to turbines and, more specifically, to integrating sections of a turbine system.

A turbomachine, such as a gas turbine engine, may include a compressor, a combustor, a turbine, and a diffuser section. Gasses are compressed in the compressor, combined with fuel, and then fed into the combustor, where the gas/fuel mixture is combusted. The high temperature and high energy combustion fluids are then fed to the turbine, wherein one or more stationary nozzle stages and one or more rotating airfoil stages convert the energy of the fluids to mechanical energy. Exhaust fluid may then exit the turbine and enter a diffuser section. The diffuser section receives the exhaust fluids from the turbine, and gradually increases the pressure and reduces the velocity of the exhaust fluids. Certain turbine systems include a turbine section and a diffuser section that are independently designed for optimal performance.

### BRIEF DESCRIPTION

The present disclosure relates to a gas turbine as set forth in the claims. Certain embodiments commensurate in scope with the originally claimed subject matter are summarized below. These embodiments are not intended to limit the scope of the claimed subject matter, but rather these embodiments are intended only to provide a brief summary of possible forms of the subject matter. Indeed, the subject matter may encompass a variety of forms that may be similar to or different from the embodiments set forth below.

In a first embodiment, a gas turbine includes a turbine and an axial-radial diffuser. The turbine includes a last stage airfoil section, which includes a first inner annular wall disposed about an axis of rotation of the gas turbine, a plurality of airfoils, each having a proximal end coupled to the first inner annular wall and extending outward in a radial direction to a distal end, a tip shroud including a first outer annular wall disposed about the first inner annular wall and coupled to the distal ends of each of the plurality of airfoils, and a stationary shroud including a second outer annular wall disposed about the first inner annular wall and the first outer annular wall. The first inner annular wall is angled with respect to the axis of rotation at a first inner angle average, the first outer annular wall is angled with respect to the axis of rotation at a first outer angle average along the last stage airfoil section, and the second outer annular wall is angled with respect to the axis of rotation at a second outer angle average along the last stage airfoil section. The axial-radial diffuser includes a first diffuser section, which includes a third inner annular wall disposed about the axis of rotation of the gas turbine, and a third outer annular wall disposed about the third inner annular wall, wherein the first diffuser section is disposed immediately downstream from the last stage airfoil section, wherein the third inner annular wall is angled with respect to the axis of rotation at a third inner angle average, and the third outer annular wall is angled with respect to the axis of rotation at a third outer angle average along the first diffuser section. The first outer angle average is greater than the third outer angle average, the first inner angle average is greater than the third inner angle average, and the third outer angle average is greater than the second outer angle average.

Further disclosed is a gas turbine which includes a turbine, a shroud section, and an axial-radial diffuser. The turbine includes a last stage nozzle section, an inter-blade gap section, and a last stage airfoil section. The last stage nozzle section includes a plurality of nozzles, a first inner annular wall disposed about the axis of rotation of the gas turbine, and a first outer annular wall disposed about the first inner annular wall, wherein the first inner annular wall is angled with respect to the axis of rotation at a first inner angle average, and the first outer annular wall is angled with respect to the axis of rotation at a first outer angle average along the last stage nozzle section. The inter-blade gap section includes a second inner annular wall disposed about the axis of rotation of the gas turbine, and a second outer annular wall disposed about the second inner annular wall, wherein the inter-blade gap section is disposed immediately downstream of the last stage nozzle section, wherein the second inner annular wall is angled with respect to the axis of rotation at a second inner angle average, and the second outer annular wall is angled with respect to the axis of rotation at a second outer angle average along the inter-blade gap section. The last stage airfoil section includes a third inner annular wall disposed about the axis of rotation of the gas turbine, a plurality of airfoils, each having a proximal end coupled to the third inner annular wall and extending outward in a radial direction to a distal end, a tip shroud comprising a third outer annular wall disposed about the third inner annular wall, and coupled to the distal ends of each of the plurality of airfoils, and a stationary shroud comprising a fourth outer annular wall disposed about the third inner annular wall and the third outer annular wall. The last stage airfoil section is disposed immediately downstream of the inter-blade gap section, wherein the third inner annular wall is angled with respect to the axis of rotation at a third inner angle average, the third outer annular wall is angled with respect to the axis of rotation at a third outer angle average along the last stage airfoil section, and the fourth outer annular wall is angled with respect to the axis of rotation at a fourth outer angle average along the last stage airfoil section. The axial-radial diffuser includes a first and a second diffuser section. The first diffuser section includes a fifth inner annular wall disposed about the axis of rotation of the gas turbine, and a fifth outer annular wall disposed about the fifth inner annular wall, wherein the first diffuser section is disposed immediately downstream from the last stage airfoil section, wherein the fifth inner annular wall is angled with respect to the axis of rotation at a fifth inner angle average, and the fifth outer annular wall is angled with respect to the axis of rotation at a fifth outer angle average along the first diffuser section. The second diffuser section includes a sixth inner annular wall disposed about the axis of rotation of the gas turbine, and a sixth outer annular wall disposed about the sixth inner annular wall, wherein the second diffuser section is disposed immediately downstream of the first diffuser section, wherein the sixth inner annular wall is angled with respect to the axis of rotation at a sixth inner angle average, and the sixth outer annular wall is angled with respect to the axis of rotation at a sixth outer angle average along the second diffuser section. The third outer angle average is greater than the fifth outer angle average, the third inner angle average is greater than the fifth inner angle average, and the fifth outer angle average is greater than the fourth outer angle average.

Still further disclosed is furthermore a method which includes providing a turbine and an axial-radial diffuser. The turbine includes a last stage airfoil section, which includes a first inner annular wall disposed about an axis of rotation of the gas turbine, a plurality of airfoils, each having a proximal end coupled to the first inner annular wall and extending outward in a radial direction to a distal end, a tip shroud including a first outer annular wall disposed about the first inner annular wall and coupled to the distal ends of each of the plurality of airfoils, and a stationary shroud including a second outer annular wall disposed about the first inner annular wall and the first outer annular wall. The first inner annular wall is angled with respect to the axis of rotation at a first inner angle average, the first outer annular wall is angled with respect to the axis of rotation at a first outer angle average along the last stage airfoil section, and the second outer annular wall is angled with respect to the axis of rotation at a second outer angle average along the last stage airfoil section. The axial-radial diffuser includes a first diffuser section, which includes a third inner annular wall disposed about the axis of rotation of the gas turbine, and a third outer annular wall disposed about the third inner annular wall, wherein the first diffuser section is disposed immediately downstream from the last stage airfoil section, wherein the third inner annular wall is angled with respect to the axis of rotation at a third inner angle average, and the third outer annular wall is angled with respect to the axis of rotation at a third outer angle average along the first diffuser section. The first outer angle average is greater than the third outer angle average, the first inner angle average is greater than the third inner angle average, and the third outer angle average is greater than the second outer angle average.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 is a diagram of one embodiment of a turbomachine in accordance with aspects of the present disclosure;
FIG. 2 is a side section view of an embodiment of an integrated last stage of a turbine and diffuser in accordance with aspects of the present disclosure;
FIG. 3 is a flow chart for a process for assembling the integrated system shown in FIG. 2 in accordance with aspects of the present disclosure;
FIG. 4 is an example plot of the normalized pressure total absolute (PTA) profile for one embodiment of the integrated system in accordance with aspects of the present disclosure;
FIG. 5 is an example plot of the swirl profile for one embodiment of the integrated system in accordance with aspects of the present disclosure; and
FIG. 6 is an example plot of the pressure recovery coefficient of the diffuser in one embodiment of the integrated system in accordance with aspects of the present disclosure.

### DETAILED DESCRIPTION

One or more specific embodiments of the present subject matter will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," "the," and "said" are intended to mean that there are one or more of the elements. The terms "comprising," "including," and "having" are intended to be inclusive and mean that there may be additional elements other than the listed elements.

Following combustion in a gas turbine engine, exhaust fluids exit the combustor, flow through the turbine, and enter the diffuser. The turbine exit flow profile (i.e., the radial profile of total pressure and swirl) may be correlative of diffuser performance (i.e., the pressure recovery coefficient, Cp). Typically, the turbine and the diffuser are independently designed for optimal performance. Unfortunately, when such systems are integrated, the combined turbine and diffuser may not function optimally. As described below, the hub and the casing of the turbine may be designed to create total pressure (PTA) and swirl profiles at the inlet of the diffuser, which may help to improve diffuser performance. Additionally, the casing of the diffuser may be designed such that the wall angles are steeper early (e.g., upstream) in the diffuser when the flow is energy rich, and then shallower later (e.g., downstream) when the flow is lower in energy to prevent separation. The differences in the angles may also create an impinging effect, creating a local PTA spike, which also improves diffuser performance. The techniques disclosed herein may be used to design a turbine and a diffuser to work together to improve the overall performance of the system.

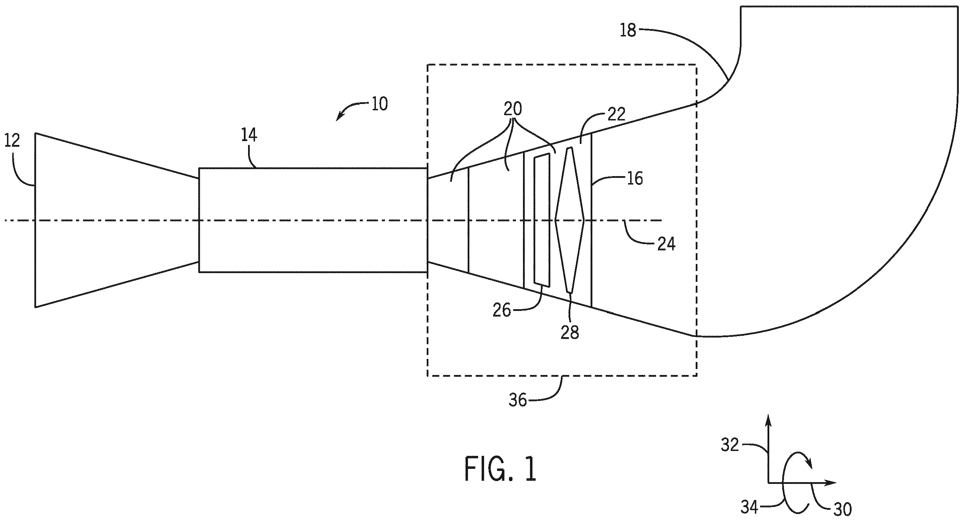

Turning now to the figures, FIG. 1 is a diagram of one embodiment of a turbomachine 10 (e.g., a gas turbine engine). The turbomachine 10 shown in FIG. 1 includes a compressor 12, a combustor 14, a turbine 16, and a diffuser 18. An oxidant, or some other gas, is compressed in the compressor 12, mixed with fuel, fed into the combustor 14, and then combusted. The combustion fluids are fed to the turbine 16 where the energy from the exhaust fluids is converted to mechanical energy. The turbine includes a plurality of stages 20, including a last stage 22. Each stage 20 may include a rotor, coupled to a rotating shaft, with an annular array of axially aligned blades, buckets or airfoils, which rotates about a rotational axis 24, and a stator with an annular array of nozzles. Accordingly, the last stage 22 may include a last nozzle stage 26 and a last airfoil stage 28. The exhaust fluids exit the turbine and enters the diffuser 18, which increases the pressure of the exhaust fluids and reduces the velocity of the exhaust fluids. It should be understood that even though a radial diffuser is shown in FIG. 1, some embodiments may include an axial diffuser. For clarity, FIG. 1 includes a coordinate system including an axial direction 30, a radial direction 32, and a circumferential direction 34. Additionally, a radial plane 36 is shown. The radial plane 36 extends in the axial direction 30 (along the rotational axis 24 in one direction, and then extends outward in the radial direction.

When the turbine 16 and the diffuser 18 are designed to work with one another, the performance of the diffuser 18 may be improved. As described below, the hub and the casing of the turbine 16 may be designed to create desirable total pressure (PTA) and swirl profiles at the inlet of the diffuser 18, which may help to improve diffuser 18 performance. The casing of the diffuser 18 may then be designed such that the wall angles are steeper early (e.g., upstream) in the diffuser 18 to extract energy when the flow is energy rich, and then shallower later (e.g., downstream) when the flow is lower in energy to prevent separation.

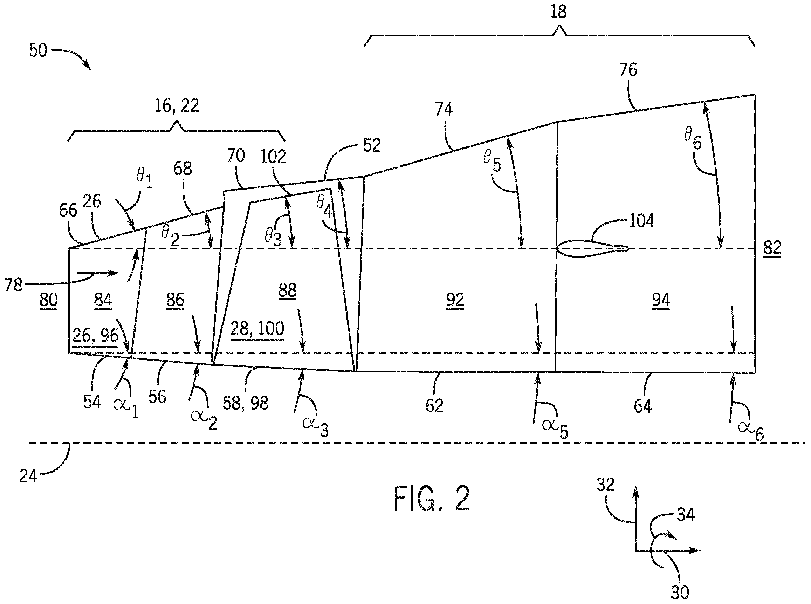

FIG. 2 illustrates a side section view of an embodiment of the last stage 22 of a turbine 16 and a diffuser 18 integrated together in order to improve the performance of the diffuser 18. The integrated system 50 may include a turbine 16 and a diffuser 18 coupled together. The turbine 16 and diffuser 18 may be part of a turbomachine 10 (e.g., a gas turbine engine). However, in other embodiments, the turbine 16 and diffuser 18 may be part of other systems, such as a steam turbine engine, and the like.

The integrated system 50 may include a series of connected inner annular walls 54, 56, 58, 62, 64 extending in an axial direction 30 and wrapping in the circumferential direction 34 about the rotational axis 24. The integrated system may also include a series of connected outer annular walls 66, 68, 70, 74, 76 which circumferentially surround and may be coaxial to the inner annular walls 54, 56, 58, 62, 64 which also extend in the axial direction 30 and wrap in the circumferential direction 34 about the rotational axis 24. The inner annular walls 54, 56, 58, 62, 64 and the outer annular wall 66, 68, 70, 74, 76 define an annular flow path 78 through which fluid (e.g., exhaust fluids) may flow from an upstream end 80 to a downstream end 82 of the integrated system 50. As shown in FIG. 2, the integrated system 50 and the corresponding annular flow path 78 (as defined by the inner annular walls 54, 56, 58, 62, 64 and the outer annular walls 66, 68, 70, 74, 76) may be broken up into sections. For example, in the embodiment shown in FIG. 2, from upstream end 80 to downstream end 82, the sections include a last nozzle stage section 84 (e.g., last nozzle stage 26) having an inner annular wall 54 and an outer annular wall 66, an inter-blade gap section 86 having an inner annular wall 56 and an outer annular wall 68, a last airfoil stage section 88 (e.g., last airfoil stage 28) having an inner annular wall 58 and an outer annular wall 70 (e.g., shroud 52), a first diffuser section 92 having a fifth annular inner wall 62 and an outer annular wall 74, and a second diffuser section 94 having a sixth inner annular wall 64 and a sixth outer annular wall 76.

The velocity of the exhaust fluid is generally increased through the turbine. As shown in FIG. 2, the annular flow path 78 is generally divergent through the diffuser as the velocity of the exhaust fluid is reduced and the pressure of the exhaust fluid is increased. Also, as shown in FIG. 2, the average angle of the inner annular walls 54, 56, 58, 62, 64 (e.g., a) and the outer annular walls 66, 68, 70, 74, 76 (e.g., θ) may vary from section to section.

In FIG. 2, the angles of the inner annular walls 54, 56, 58, 62, 64 are represented by a. The average angle of inner annular wall 54 along the last nozzle stage section 84 is represented by α₁. In the embodiment shown in FIG. 2, α₁ is approximately -4.7 degrees. However, α₁ may be any value between -3.7 and -5.7 degrees. The average angle of inner annular wall 56 along the last inter-blade gap section 86 is represented by α₂. In the embodiment shown in FIG. 2, α₂ is approximately -4.7 degrees. However, α₂ may be any value between -3.7 and -5.7 degrees. It should be understood that though α₁ and α₂ are at the same angle in FIG. 2, in other embodiments, α₁ and α₂ may be different from one another. The average angle of inner annular wall 58 along the last airfoil stage section 88 is represented by α₃. In the embodiment shown in FIG. 2, α₃ is approximately -4.6 degrees. However, α₃ may be any value between -3.6 and -5.6 degrees. The average angle of inner annular wall 62 along the first diffuser section 92 is represented by α₅. The average angle of the sixth inner annular wall 64 along the second diffuser section 94 is represented by α₆. In the embodiment shown in FIG. 2, α₅, and α₆ are zero. However, it should be understood that in some embodiments α₅ and α₆ may not be zero and may or may not be different from one another.

Similarly, in FIG. 2, the angles of the outer annular walls 66, 68, 70, 74, 76 are represented by θ. The average angle of outer annular wall 66 along the last nozzle stage section 84 is represented by θ₁. In the embodiment shown in FIG. 2, θ₁ is approximately 15.9 degrees. However, θ₁ may be any value between 14.9 degrees and 16.9 degrees. The average angle of outer annular wall 68 along the last inter-blade gap section 86 is represented by θ₂. In the embodiment shown in FIG. 2, θ₂ is approximately 15 degrees. However, θ₂ may be any value between 14 and 16 degrees. The last airfoil stage section 88 includes one or more airfoils 100, each airfoil having a tip 102 (e.g., third annular outer wall, or tip shroud), surrounded by a shroud 52 (e.g., fourth annular outer wall). The average angle of the airfoil tip 102 (e.g., third annular outer wall, or tip shroud) is represented by θ₃. In the embodiment shown in FIG. 2, θ₃ is approximately 19.3 degrees. However, θ₃ may be any value between 18.3 and 20.3 degrees. The average angle of outer annular wall 70 (e.g., shroud 52), surrounding the airfoils 100 along the last airfoil stage section 88 is represented by θ₄. In the embodiment shown in FIG. 2, θ₄ is approximately 6.9 degrees. However, θ₄ may be any value between 5.9 and 7.9 degrees. The average angle of outer annular wall 74 along the first diffuser section 92 is represented by θ₅. In the embodiment shown in FIG. 2, θ₅ is approximately 15.7 degrees. However, θ₅ may be any value between 14.7 and 16.7 degrees. The average angle of the sixth outer annular wall 76 along the second diffuser section 94 is represented by θ₆. In the embodiment shown in FIG. 2, θ₆ is approximately 8.2 degrees. However, θ₆ may be any value between 7.2 and 9.2 degrees.

It should be understood, however, that the angles of the inner annular walls 54, 56, 58, 62, 64 and the outer annular walls 66, 68, 70, 74, 76 shown in FIG. 2 represent the average angle along that section. In some embodiments, the angles of the inner annular walls 54, 56, 58, 62, 64 and the outer annular wall walls 66, 68, 70, 74, 76 may vary across a section. In some embodiments, the inner annular walls 54, 56, 58, 62, 64 and/or the outer annular walls 66, 68, 70, 74, 76 may be curved as one moves downstream in the axial direction 30. Additionally, the transitions from one section to another in FIG. 2 are shown as "hard" transitions in that the angle of the inner annular walls 54, 56, 58, 62, 64 and/or the outer annular walls 66, 68, 70, 74, 76 changes immediately between sections. However, in some embodiments, changes in the angles of the inner annular walls 54, 56, 58, 62, 64 and/or the outer annular walls 66, 68, 70, 74, 76 may be achieved through smooth transitions.

In some embodiments, the shapes of the inner annular walls 54, 56, 58, 62, 64 and the outer annular walls 66, 68, 70, 74, 76 may not be defined by the values of individual angles, but rather by the differences between certain angles (e.g., impingement angles) or the values of some angles in relation to the value of other angles. For example, the difference between θ₃ and θ₅ may be 3.6 ± 2.0 degrees. For example, the difference between θ₃ and θ₅ may be 1.6, 1.8, 2.0, 2.2, 2.4, 2.6, 2.8, 3.0, 3.2, 3.4, 3.8, 4.0, 4.2, 4.4, 4.6, 4.8, 5.0, 5.2, 5.4, or 5.6 degrees. Similarly, the difference between θ₃ and θ₅ may be 4.6 ± 2.0 degrees. For example, the difference between α₃ and α₅ may be 2.6, 2.8, 3.0, 3.2, 3.4, 3.6, 3.8, 4.0, 4.2, 4.4, 4.8, 5.0, 5.2, 5.4, 5.6, 6.8, 6.0, 6.2, 6.4, or 6.6 degrees. Similarly, the difference between θ₄ and θ₅ may be 8.8 ± 2.0 degrees. For example, the difference between θ₄ and θ₅ may be 6.8, 7.0, 7.2, 7.4, 7.6, 7.8, 8.0, 8.2, 8.4, 8.6, 9.0, 9.2, 9.4, 9.6, 9.8, 10.0, 10.2, 10.4, 10.6, or 10.8 degrees.

In some embodiments, the last nozzle stage 26 may include a plurality of airfoil-shaped nozzles 96 disposed circumferentially around inner annular wall 54 and extending in a radial direction 32 to outer annular wall 66. In some embodiments, the nozzles 96 may include a suction side bulge and/or a pressure side tilt. It should be understood, however, that the techniques disclosed herein may also be used in a system having a last nozzle stage 26 with nozzles 96 that do not have a suction side bulge or a pressure side tilt.

As previously discussed, the average angle of inner annular wall 54 along the last nozzle stage section 84 is represented by α₁. In the embodiment shown in FIG. 2, α₁ is approximately -4.7 degrees. However, α₁ may be any value between -3.7 and -5.7 degrees. For example, α₁ may be -3.7, -3.9, -4.1, -4.3, -4.5, -4.9, 5.0, -5.1, -5.3, -5.5, or -5.7 degrees. The average angle of outer annular wall 66 along the last nozzle stage section 84 is represented by θ₁. In the embodiment shown in FIG. 2, θ₁ is approximately 15.9 degrees. However, θ₁ may be any value between 14.9 degrees and 16.9 degrees. For example, θ₁ may be 14.9, 15.0, 15.1, 15.3, 15.5, 15.7, 16.0, 16.1, 16.3, 16.5, 16.7, 16.9, or 17 degrees.

Disposed immediately downstream of the last nozzle stage section 84 is the inter-blade gap section 86. The inter-blade gap section 86 is an annular shaped space disposed between inner annular wall 56 and outer annular wall 68 in the radial direction 32 and between the last nozzle stage section 84 and the last airfoil stage section 88 in the axial direction 30. The inter-blade gap section 86 provides a space through which fluid flows between the last nozzle stage 26 and the last airfoil stage 28. It should be understood that FIG. 2 is not drawn to scale and that the length of the inter-blade gap section 86 in the axial direction 30 may be longer or shorter than the last nozzle stage section 84 located immediately upstream and the last airfoil stage section 88 located immediately downstream.

The average angle of inner annular wall 56 along the last inter-blade gap section 86 is represented by α₂. In the embodiment shown in FIG. 2, α₂ is approximately -4.7 degrees. However, α₂ may be any value between -3.7 and -5.7 degrees. For example, α₂ may be -3.7, -3.9, 4.0, -4.1, -4.3, -4.5, -4.9, 5.0, -5.1, -5.3, -5.5, or -5.7 degrees. It should be understood that though α₁ and α₂ are at the same angle in FIG. 2, in other embodiments, α₁ and α₂ may be different from one another. The average angle of outer annular wall 68 along the inter-blade gap section 86 is represented by θ₂. In the embodiment shown in FIG. 2, θ₂ is approximately 15 degrees. However, θ₂ may be any value between 14 and 16 degrees. For example, θ₂ may be 14.0, 14.2, 14.4, 14.6, 14.8, 15.2, 15.4, 15.6, or 15.8 degrees.

Disposed immediately downstream of the inter-blade gap section 86 is the last stage airfoil section 88. In some embodiments, the last airfoil stage 28, inner annular wall 58 may be part of a hub 98. The last airfoil stage 28 may further include a plurality of airfoil-shaped airfoils 100 disposed circumferentially about the hub 98 and extending outward in a radial direction 32 toward a tip 102. The tip 102 is disposed at the distal end of the airfoil 100 and is proximate to an interior surface of outer annular wall 70. The tip may have a tip shroud surrounded by a stationary shroud 52 or an annular wall 70. In some embodiments, the airfoil 100 may be designed with an increased thickness centered at approximately 65% of the span between the hub 98 and the tip 102. It should be understood, however, that the techniques disclosed herein may also be used in a system having a last airfoil stage 28 with airfoils 100 that do not have an increased thickness centered at approximately 65% of the span between the hub 98 and the tip 102.

The average angle of inner annular wall 58 along the last airfoil stage section 88 is represented by α₃. In the embodiment shown in FIG. 2, α₃ is approximately -4.6 degrees. However, α₃ may be any value between -3.6 and -5.6 degrees. For example, α₃ may be -3.6, -3.8, -4.0, -4.2, -4.4, -4.8, -5.0, -5.2, -5.4, or -5.6 degrees. The average angle of the airfoil tip 102 (e.g., outer annular wall, or tip shroud) along the airfoil 100 is represented by θ₃. In the embodiment shown in FIG. 2, θ₃ is approximately 19.3 degrees. However, θ₃ may be any value between 18.3 and 20.3 degrees. For example, θ₃ may be 18.3, 18.5, 18.7, 18.9, 19.0, 19.1, 19.5, 19.7, 19.9, 20.0, 20.1, or 20.3 degrees. The average angle of outer annular wall 70 (e.g., shroud 52) along the last airfoil stage section 88 is represented by θ₄. In the embodiment shown in FIG. 2, θ₄ is approximately 6.9 degrees. However, θ₄ may be any value between 5.9 and 7.9 degrees. For example, θ₄ may be 5.9, 6.0, 6.1, 6.3, 6.5, 6.7, 7.0, 7.1, 7.3, 7.5, 7.7, 7.9, or 8.0 degrees.

The diffuser 18 may be disposed immediately downstream of the last airfoil stage section 88. By increasing the volume of the flow path of the exhaust fluids flowing through the diffuser 18, the diffuser reduces the speed and increases the pressure of the exhaust fluids. For the sake of clarity, in this disclosure the diffuser 18 will be described as having two sections, defined by their spatial relationship to the diffuser strut 104: a first diffuser section 92 and a second diffuser section 94. It should be understood, however, that in operation the diffuser 18 may not actually be divided into two sections. The first diffuser section is an annular shaped space disposed between inner annular wall 62 and outer annular wall 74 in the radial direction 32 and between the last airfoil stage section 88 and the second diffuser section 94 in the axial direction 30. The first diffuser section 92 is the portion of the diffuser 18 that is immediately downstream of the shroud 52 and immediately upstream of the diffuser strut 104. The first diffuser section 92 provides a space through which exhaust fluid flows between
the last airfoil stage section 88 and the second diffuser section 94. It should be understood that FIG. 2 is not drawn to scale and that the length of the first diffuser section 92 in the axial direction 30 may be longer or shorter relative to the other sections 84, 86, 88, 94 shown in FIG. 2.

The average angle of inner annular wall 62 along the first diffuser section 92 is represented by as. In the embodiment shown in FIG. 2, α₅ and α₆ are zero. However, it should be understood that in some embodiments α₅ and α₆ may not be zero and may or may not be different from one another. The average angle of outer annular wall 74 along the first diffuser section 92 is represented by θ₅. In the embodiment shown in FIG. 2, θ₅ is approximately 15.7 degrees. However, θ₅ may be any value between 14.7 and 16.7 degrees. For example, θ₅ may be 14.7, 14.9, 15.0, 15.1, 15.3, 15.5, 15.9, 16.0, 16.1, 16.3, 16.5, or 16.7 degrees.

The second diffuser section 94 is disposed immediately downstream of the first diffuser section 92. The second diffuser section 94 is an annular shaped space disposed between the sixth inner annular wall 64 and the sixth outer annular wall 76 in the radial direction 32 and between the first diffuser section 92 and the downstream end 82 of the diffuser 18 in the axial direction 30. The second diffuser section 94 is the portion of the diffuser 18 that extends in the axial direction from about the leading edge of the diffuser strut 104 to the downstream end 82 of the diffuser 18. However in some embodiments, the axial extent of the strut 104 may be shared by both the first section 92 and second section 94 of the diffuser. The second diffuser section 94 provides a space through which exhaust fluid flows between the first diffuser section 92 and the downstream 82 of the diffuser 18. It should be understood that FIG. 2 is not drawn to scale and that the length of the second diffuser section 94 in the axial direction 30 may be longer or shorter relative to the other sections 84, 86, 88, 92 shown in FIG. 2.

The average angle of the sixth inner annular wall 64 along the second diffuser section 94 is represented by α₆. In the embodiment shown in FIG. 2, α₄, α₅, and α₆ are zero. However, it should be understood that in some embodiments α₄, α₅, and α₆ may not be zero and may or may not be different from one another. The average angle of the sixth outer annular wall 76 along the second diffuser section 94 is represented by θ₆. In the embodiment shown in FIG. 2, θ₆ is approximately 8.2 degrees. However, θ₆ may be any value between 7.2 and 9.2 degrees. For example, θ₆ may be 7.0, 7.2, 7.4, 7.6, 7.8, 8.0, 8.4, 8.6, 8.8, 9.0, or 9.2 degrees.

As previously discussed, it should be understood that the angles of the inner annular walls 54, 56, 58, 62, 64 and the outer annular walls 66, 68, 70, 74, 76 shown in FIG. 2 and discussed above represent the average angle along a section. In some embodiments, the angles of the inner annular walls 54, 56, 58, 62, 64 and/or the outer annular walls 66, 68, 70, 74, 76 may vary across a section. In some embodiments, the inner annular walls 54, 56, 58, 62, 64 and/or the outer annular walls 66, 68, 70, 74, 76 may have a curved shape. Additionally, the transitions from one inner annular wall 54, 56, 58, 62, 64 to another or from one outer annular wall 66, 68, 70, 74, 76 to another in FIG. 2 are shown as "hard" transitions in that the angle of the inner annular walls 54, 56, 58, 62, 64 and/or the outer annular walls 66, 68, 70, 74, 76 changes immediately between sections. However, in some embodiments, changes in the angles of the inner annular walls 54, 56, 58, 62, 64 and/or the outer annular walls 66, 68, 70, 74, 76 may be achieved through smooth transitions.

In some embodiments, the shapes of the inner annular walls 54, 56, 58, 62, 64 and the outer annular walls 66, 68, 70, 74, 76 may not be defined by the values of individual angles, but rather by the differences between certain angles or the values of some angles in relation to the value of other angles. For example, the difference between θ₃ and θ₅ may be 3.6 ± 2.0 degrees. For example, the difference between θ₃ and θ₅ may be 1.6, 1.8, 2.0, 2.2, 2.4, 2.6, 2.8, 3.0, 3.2, 3.4, 3.8, 4.0, 4.2, 4.4, 4.6, 4.8, 5.0, 5.2, 5.4, or 5.6 degrees. Similarly, the difference between α₃ and α₅ may be 4.6 ± 2.0 degrees. For example, the difference between α₃ and α₅ may be 2.6, 2.8, 3.0, 3.2, 3.4, 3.6, 3.8, 4.0, 4.2, 4.4, 4.8, 5.0, 5.2, 5.4, 5.6, 6.8, 6.0, 6.2, 6.4, or 6.6 degrees. The difference between θ₄ and θ₅ may be 8.8 ± 2.0 degrees. For example, the difference between θ₄ and θ₅ may be 6.8, 7.0, 7.2, 7.4, 7.6, 7.8, 8.0, 8.2, 8.4, 8.6, 9.0, 9.2, 9.4, 9.6, 9.8, 10.0, 10.2, 10.4, 10.6, or 10.8 degrees.

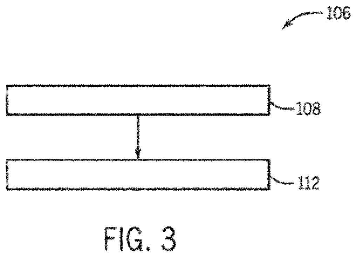

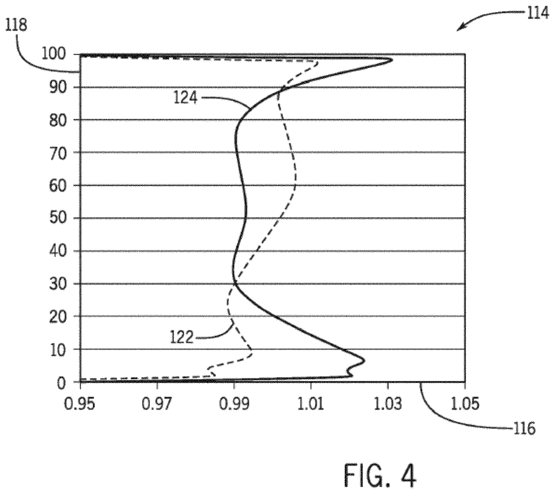

The values discussed with regard to FIG. 2 for the angles of the inner annular walls and the outer annular walls across the last stage nozzle section 84, the inter-blade gap section 86, and the last airfoil stage section 88 (e.g., θ₁, θ₂, θ₃, θ₄, α₁, α₂, α₃) may help to create desirable PTA and swirl profiles at the inlet of the diffuser 18. FIGS. 3 and 4 are example PTA and swirl profiles of a system having the integrated system 50 shown in FIG. 2, as well as the last stage nozzle design. It should be understood, however, that FIGS. 3 and 4 are merely intended to be examples and that some embodiments of the integrated system 50 may produce different PTA and swirl profiles, depending on a number of different factors, such as the shape of the nozzles in the turbine, the shape of the airfoils in the turbine, and the like.

FIG. 3 is a flow chart for a process 106 for assembling an integrated system 50. In block 108, a turbine 16 is provided. The turbine 16 may include a last stage nozzle section 84, an inter-blade gap section 86, a last stage airfoil section 88, or some combination thereof. The last stage nozzle section 84 may include a plurality of nozzles 96, an inner annular wall 54 disposed about the axis of rotation 24 turbine 16, and an outer annular wall 66 disposed about inner annular wall 54. Inner annular wall 54 may be angled with respect to the axis of rotation 24 at a first inner angle average α₁, and outer annular wall 66 is angled with respect to the axis of rotation 24 at a first outer angle average θ₁ along the last stage nozzle section 84.

The inter-blade gap section 86 may include an annular wall 56 disposed about the axis of rotation 24, and an outer annular wall 68 disposed about inner annular wall 56. The inter-blade gap section 86 may be disposed immediately downstream of the last stage nozzle section 84. Inner annular wall 56 may be angled with respect to the axis of rotation 24 at a second inner angle average α₂, and outer annular wall 68 may be angled with respect to the axis of rotation 24 at a second outer angle average θ₂ along the inter-blade gap section 86.

The last stage airfoil section 88 may include a plurality of airfoils 100, inner annular wall 58 disposed about the axis of rotation 24, an outer annular wall (e.g., tip shroud) at the tip 102 of the airfoil, and an outer annular wall 70 (e.g., stationary shroud 52) disposed about inner annular wall 58 and surrounding the airfoils 100. The last stage airfoil section 88 may be disposed immediately downstream of the inter-blade gap section 86. Inner annular wall 58 may be angled with respect to the axis of rotation 24 at a third inner angle average α₃, and the outer annular wall (e.g., tip shroud) may be angled with respect to the axis of rotation 24 at a third outer angle average θ₃ along the last stage airfoil section 88. Outer annular wall 70 (e.g., stationary shroud) may be angled with respect to the axis of rotation 24 at a fourth outer angle average θ₄ along the last stage airfoil section 88.

In block 112 an axial-radial diffuser 18 is provided. The axial-radial diffuser 18 may include a first diffuser section 92 and a second diffuser section 94. The first diffuser section 92 may include an inner annular wall 62 disposed about the axis of rotation 24, and an outer annular wall 74 disposed about inner annular wall 62. The first diffuser section 92 may be disposed immediately downstream from the last stage airfoil section 88. Inner annular wall 62 may be angled with respect to the axis of rotation 24 at a fifth inner angle average α₅, and outer annular wall 74 may be angled with respect to the axis of rotation 24 at a fifth outer angle average θ₅ along the first diffuser section 92.

The second diffuser section 94 may include a sixth inner annular wall 64 disposed about the axis of rotation 24, and a sixth outer annular wall 76 disposed about the sixth inner annular wall 64. The second diffuser section 94 may be disposed immediately downstream of the first diffuser section 92. The sixth inner annular wall 64 may be angled with respect to the axis of rotation 24 at a sixth inner angle average α₆, and the sixth outer annular wall 76 is angled with respect to the axis of rotation 24 at a sixth outer angle average θ₆ along the second diffuser section 94.

Specific values and ranges for the various inner angle averages α₁, α₂, α₃, α₅, α₆ and outer angle averages θ₁, θ₂, θ₃, θ₄, θ₅, θ₆, were discussed with regard to FIG. 2. Also discussed with regard to FIG. 2, the third outer angle average θ₃ may be greater than the fifth outer angle average θ₅, the third inner angle average α₃ may be greater than the fifth inner angle average θ₅, and the fifth outer angle average θ₅ may be greater than the fourth outer angle average θ₄. Specific values and ranges for these differences were discussed with regard to FIG. 2.

FIG. 4 shows a plot 114 of the normalized total pressure absolute (PTA) profile at the inlet of the diffuser 18. The specific plot 114 shown in FIG. 4 is from an embodiment of a turbomachine 10 using the integrated system 50 shown in FIG. 2, as well as the last stage nozzle design as set forth in U.S. Patent Application U.S. Patent Application No. 14/789,507 entitled "BULGED NOZZLE FOR CONTROL OF SECONDARY FLOW AND OPTIMAL DIFFUSER PERFORMANCE," filed on July 1, 2015, and the last stage airfoil design as set forth in U.S. Patent Application No. 14/936,253 entitled "LAST STAGE AIRFOIL DESIGN FOR OPTIMAL DIFFUSER PERFORMANCE," filed on November 9, 2015. Accordingly, it should be understood that the normalized PTA plot 114 is merely an example and that different embodiments may have different PTA profiles. In FIG. 4, the horizontal axis 116 represents the unitless normalized pressure total absolute (PTA). Normalized PTA is defined as the PTA at a given percent span, divided by the average PTA across the whole span. The vertical axis 118 represents the percent span, wherein inner annular wall 62 occurs at 0% span and outer annular wall 74 occurs at 100% span. Curve 124 represents the normalized PTA profile of a system using the integrated system 50 shown in FIG. 2, as well as the last stage nozzle design as set forth in U.S. Patent Application No. 14/789,507 entitled "BULGED NOZZLE FOR CONTROL OF SECONDARY FLOW AND OPTIMAL DIFFUSER PERFORMANCE," filed on July 1, 2015, and the last stage airfoil design as set forth in U.S. Patent Application No. 14/936,253 entitled "LAST STAGE AIRFOIL DESIGN FOR OPTIMAL DIFFUSER PERFORMANCE," filed on November 9, 2015. In general, spikes in PTA near inner annular wall 62 and outer annular wall 74 improve the performance of the diffuser 18. Accordingly, the preferred profile spikes near the first annular wall (e.g., hub) from 0-30% span, is relatively flat in the middle 50%, and spikes again near the second annular wall (e.g., casing) from 80-100% span. Curve 122 represents the PTA profile of a design not using the disclosed integrated system 50. As can be seen in FIG. 4, curve 122 lacks relative spikes in normalized PTA near inner annular wall 62 and outer annular wall 74 and has a higher PTA than the curve 124 in the middle of the span. The curve 124 has the desired spikes near inner annular wall 62 and outer annular wall 74, unlike curve 122 for the system that does not utilize the disclosed techniques. Additionally, the normalized PTA curve 124 is much flatter in the middle 50% than the curve 122 for the system that does not utilize the disclosed techniques.

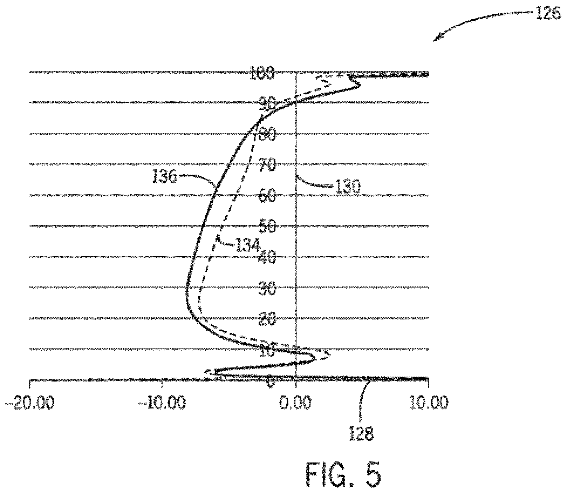

Similarly, FIG. 5 shows a plot 126 of the swirl profile at the inlet of the diffuser 18. The plot 126 in FIG. 5 is from an embodiment of a turbomachine 10 using the integrated system 50 shown in FIG. 2, as well as the last stage nozzle design as set forth in U.S. Patent Application No. 14/789,507 entitled "BULGED NOZZLE FOR CONTROL OF SECONDARY FLOW AND OPTIMAL DIFFUSER PERFORMANCE," filed on July 1, 2015, and the last stage airfoil design as set forth in U.S. Patent Application No. 14/936,253 entitled "LAST STAGE AIRFOIL DESIGN FOR OPTIMAL DIFFUSER PERFORMANCE," filed on November 9, 2015. Accordingly, the swirl profile plot 126 is merely an example. Different embodiments may have different swirl profiles. In FIG. 5, the horizontal axis 128 represents the angle of swirl in degrees relative to the axial direction 30. The vertical axis 130 represents the percent span, wherein inner annular wall 62 occurs at 0% span (i.e., base) and outer annular wall 74 occurs at 100% span (i.e., tip). Curve 136 represents the swirl profile of a system using the integrated system 50 shown in FIG. 2, as well as the last stage nozzle design as set forth in U.S. Patent Application No. 14/789,507 entitled "BULGED NOZZLE FOR CONTROL OF SECONDARY FLOW AND OPTIMAL DIFFUSER PERFORMANCE," filed on July 1, 2015, and the last stage airfoil design as set forth in U.S. Patent Application No. 14/936,253 entitled "LAST STAGE AIRFOIL DESIGN FOR OPTIMAL DIFFUSER PERFORMANCE," filed on November 9, 2015. In general, slightly negative swirl around the first annular wall and slightly positive swirl around the second annular wall, and linear slope mid-span (e.g., 20% span to 80% span) improve the performance of the diffuser. Curve 134 represents the swirl profile of a design not using the disclosed integrated system 50. As shown in FIG. 5, curve 134 has slightly negative swirl angles near inner annular wall 62 and
slightly positive swirl angles near outer annular wall 74 and has a linear slope in the middle of the span. The curve 136 has more of the desirable qualities than curve 122 for the system that does not utilize the disclosed techniques.

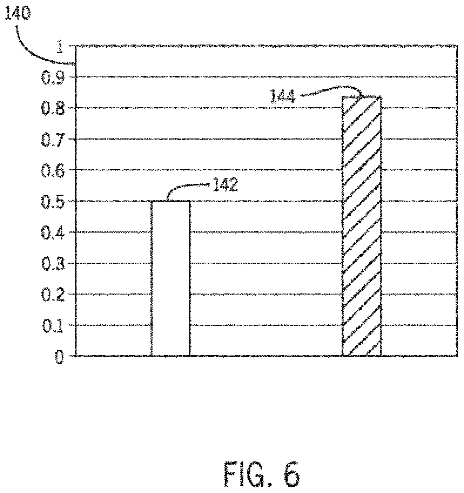

FIG. 6 is a plot that shows the improved pressure recovery coefficient (Cₚ) of the diffuser 18 having the integrated system 50 shown in FIG. 2 as compared to a previous design that does not use the disclosed techniques. The vertical axis 140 represents Cₚ values from 0 to 1. Cₚ, the ratio of the pressure recovered by the diffuser, is one way to measure diffuser performance. Cₚ varies between 0 and 1. A Cₚ value of 0 means the diffuser recovers none of the pressure of the fluid passing through it. A Cₚ value of 1 means that the diffuser recovers all of the pressure of the fluid passing through it. Generally, a higher Cₚ value is desirable. As indicated by bar 142, a design that does not utilize the disclosed techniques has a Cₚ value of approximately 0.5. Alternatively, as indicated by bar 144, the system using the integrated system 50 shown in FIG. 2, as well as the last stage nozzle design as set forth in U.S. Patent Application No. 14/789,507 entitled "BULGED NOZZLE FOR CONTROL OF SECONDARY FLOW AND OPTIMAL DIFFUSER PERFORMANCE," filed on July 1, 2015, and the last stage airfoil design as set forth in U.S. Patent Application No. 14/936,253 entitled "LAST STAGE AIRFOIL DESIGN FOR OPTIMAL DIFFUSER PERFORMANCE," filed on November 9, 2015 has a Cₚ value of about 0.82. As with FIGS. 4 and 5, the Cₚ plot shown in FIG. 6 is merely an example. Other embodiments using the disclosed techniques may produce different Cₚ values.

The integrated system 50 discussed herein helps to improve the performance of the diffuser 18 in a number of different ways. First, the shape of the inner annular walls 54, 56, 58, and the outer annular walls 66, 68, 70, across the last nozzle stage section 84, the inter-blade gap section 86, and the last airfoil (e.g., bucket or blade) stage section 88 creates favorable swirl and PTA profiles at the inlet of the diffuser 18. Specifically, PTA spikes and near-zero swirl angles around inner annular wall 62 and outer annular wall 74 improves the pressure recovery of the diffuser 18. Second, steep (e.g., greater than 14 degrees) outer annular wall 74 angles early in the diffuser 18 (e.g., first diffuser section 92) increase the recovery of residual kinetic energy in the fluid flow not extracted by the turbine 16 in the upstream end 80 of the diffuser 18 where the fluid flow is energy rich. Third, shallower sixth outer annular wall 76 angles later in the diffuser 18 (e.g., second diffuser section 94), where the fluid flow is weaker may help to avoid separation in the diffuser 18. Fourth, the differences in angles discussed with regard to FIG. 2 may create an impinging effect (e.g., the fluid hits the inner annular walls 54, 56, 58, 62, 64 and/or the outer annular walls 66, 68, 70, 74, 76 at an angle), which may also create the desired PTA spikes near inner annular wall 62 and outer annular wall 74 that improves the pressure recovery of the diffuser.

This written description uses examples to disclose the subject matter, and also to enable any person skilled in the art to practice the subject matter, including making and using any devices or systems and performing any incorporated methods. The patentable scope of the subject matter is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A gas turbine (10) comprising a turbine (16) and an axial-radial diffuser (18),
the turbine (16) comprising a last stage airfoil section (88),
the last stage airfoil section (88) comprising a first inner annular wall (58) disposed about an axis of rotation (24) of the gas turbine (10), a plurality of airfoils (100), each airfoil comprising a proximal end (98) coupled to the first inner annular wall (58) and extending outward in a radial direction to a tip (102) disposed at a distal end, wherein a tip shroud is provided at the tip, which tip shroud comprises a first outer annular wall disposed about the first inner annular wall and coupled to the distal ends of each of the plurality of airfoils (100),
the last stage airfoil section (88) further comprising a stationary shroud (52) comprising a second outer annular wall (70) disposed about the first inner annular wall (58) and the first outer annular wall (102);
the axial-radial diffuser (18) comprising a first diffuser section (92), wherein the first diffuser section comprises a third inner annular wall (62) disposed about the axis of rotation (24) of the gas turbine (10) and a third outer annular wall (74) disposed about the third inner annular wall (62),
wherein the first diffuser section (92) is disposed immediately downstream from the last airfoil stage (28),
**characterized in that** the first inner annular wall (58) is angled with respect to the axis of rotation (24) at a first inner angle average (α₃), the first outer annular wall is angled with respect to the axis of rotation (24) at a first outer angle average (θ₃) along the last stage airfoil section (88), and the second outer annular wall (70) is angled with respect to the axis of rotation (24) at a second outer angle average (θ₄) along the last stage airfoil section (88), the third inner annular wall (62) is angled with respect to the axis of rotation (24) at a third inner angle average (as), and the third outer annular wall (74) is angled with respect to the axis of rotation (24) at a third outer angle average (θ₅) along the first diffuser section (92), wherein the first outer angle average (θ₃) is greater than the third outer angle average (θ₅), the first inner angle average (α₃) is greater than the third inner angle average (as), and the third outer angle average (θ₅) is greater than the second outer angle average (θ₄).

2. The gas turbine (10) of claim 1, wherein the first outer angle average (θ₃) is between 2 degrees and 5 degrees greater than the third outer angle average (θ₅), the first inner angle average (α₃) is between 3 degrees and 6 degrees greater than the third inner angle average (as), and the third outer angle average (θ₅) is between 7 degrees and 10 degrees greater than the second outer angle average (θ₄).

3. The gas turbine (10) of claim 1, wherein the first outer angle average (θ₃) is 4 degrees greater than the third outer angle average (θ₅), the first inner angle average (α₃) is 5 degrees greater than the third inner angle average (as), and the third outer angle average (θ₅) is 9 degrees greater than the second outer angle average (θ₄).

4. The gas turbine (10) of claim 1, wherein the first outer angle average (θ₃) is between 19 degrees and 20 degrees, the second outer angle average (θ₄) is between 6 degrees and 8 degrees, the third outer angle average (θ₅) is between 15 degrees and 16 degrees, and the third inner angle average (as) is less than 2 degrees.

5. The gas turbine (10) of claim 1, wherein the first outer angle average (θ₃) is 19 degrees, the second outer angle average (θ₄) is 7 degrees, the third outer angle average (θ₅) is 16 degrees, and the third inner angle average (as) is 0 degrees.

6. The gas turbine (10) of claim 1, wherein the turbine (16) further comprises a last stage nozzle section (84) disposed upstream of the last stage airfoil section (88) and an inter-blade gap section (86) disposed immediately downstream of the last stage nozzle section (84) and immediately upstream of the last stage airfoil section (88),
the last stage nozzle section (84) comprising a plurality of nozzles (96), a fourth inner annular wall (54) disposed about the axis of rotation (24) of the gas turbine (10), and a fourth outer annular wall (66) disposed about the fourth inner annular wall (54);
the inter-blade gap section (86) comprising a fifth inner annular wall (56) disposed about the axis of rotation (24) of the gas turbine (10) and a fifth outer annular wall (68) disposed about the fifth inner annular wall (56);
and wherein further the axial-radial diffuser comprises a second diffuser section (94) disposed immediately downstream of the first diffuser section (92), the second diffuser section comprising a sixth inner annular wall (64) disposed about the axis of rotation (24) of the gas turbine (10) and a sixth outer annular wall (76) disposed about the sixth inner annular wall (64);
wherein the fourth inner annular wall (54) is angled with respect to the axis of rotation (24) at a fourth inner angle average (α₁), the fourth outer annular wall (66) is angled with respect to the axis of rotation (24) at a fourth outer angle average (θ₁) along the last stage nozzle section (84), the fifth inner annular wall (56) is angled with respect to the axis of rotation (24) at a fifth inner angle average (α₂), the fifth outer annular wall (68) is angled with respect to the axis of rotation (24) at a fifth outer angle average (θ₂) along the inter-blade gap section (86); the sixth inner annular wall (64) is angled with respect to the axis of rotation (24) at a sixth inner angle average (α₆), and the sixth outer annular wall (76) is angled with respect to the axis of rotation (24) at a sixth outer angle average (θ₆) along the second diffuser section (76).

7. The gas turbine (10) of claim 6, wherein the fourth outer angle average (θ₁) is between 15 degrees and 17 degrees, the fifth outer angle average (θ₂) is between 14 degrees and 16 degrees, the sixth outer angle average (θ₆) is between 7 degrees and 9 degrees, the fourth inner angle average (α₁) is between 4 degrees and 6 degrees, the fifth inner angle average (α₂) is between 4 degrees and 5 degrees, the first inner angle average (α₃) is between 4 degrees and 5 degrees, and the sixth inner angle average (α₆) is less than 2 degrees.

8. The gas turbine of claim 6, wherein the fourth outer angle average (θ₁) is 16 degrees, the fifth outer angle average (θ₂) is 15 degrees, the sixth outer angle average (θ₆) is 8 degrees, the fourth inner angle average (α₁) is 5 degrees, the fifth inner angle average (α₂) is 5 degrees, the first inner angle average (α₃) is 5 degrees, and the sixth inner angle average (α₆) is 0 degrees.

## Patentansprüche

1. Gasturbine (10), umfassend eine Turbine (16) und einen Axial-Radial-Diffusor (18),
wobei die Turbine (16) einen Tragflächenabschnitt (88) der letzten Stufe umfasst,
wobei der Tragflächenabschnitt (88) der letzten Stufe eine erste innere ringförmige Wand (58) umfasst, die um eine Drehachse (24) der Gasturbine (10) herum angeordnet ist, eine Vielzahl von Tragflächen (100), wobei jede Tragfläche ein proximales Ende (98) umfasst, das mit der ersten inneren ringförmigen Wand (58) gekoppelt ist und sich in einer radialen Richtung auswärts zu einer Spitze (102) erstreckt, die an einem distalen Ende angeordnet ist, wobei an der Spitze eine Spitzenabdeckung bereitgestellt ist, welche Spitzenabdeckung eine erste äußere ringförmige Wand umfasst, die um die erste innere ringförmige Wand herum angeordnet und mit den distalen Enden jeder aus der Vielzahl von Tragflächen (100) gekoppelt ist,
wobei der Tragflächenabschnitt (88) der letzten Stufe weiter eine stationäre Abdeckung (52) umfasst, die eine zweite äußere ringförmige Wand (70) umfasst, welche um die erste innere ringförmige Wand (58) und die erste äußere ringförmige Wand (102) herum angeordnet ist;
wobei der Axial-Radial-Diffusor (18) einen ersten Diffusorabschnitt (92) umfasst, wobei der erste Diffusorabschnitt eine dritte innere ringförmige Wand (62) umfasst, die um die Drehachse (24) der Gasturbine (10) herum angeordnet ist, und eine dritte äußere ringförmige Wand (74), die um die dritte innere ringförmige Wand (62) herum angeordnet ist,
wobei der erste Diffusorabschnitt (92) unmittelbar stromabwärts der letzten Tragflächenstufe (28) angeordnet ist,
**dadurch gekennzeichnet, dass** die erste innere ringförmige Wand (58) in Bezug auf die Drehachse (24) in einem ersten inneren Winkeldurchschnitt (α₃) gewinkelt ist, die erste äußere ringförmige Wand in Bezug auf die Drehachse (24) in einem ersten äußeren Winkeldurchschnitt (θ₃) entlang des Tragflächenabschnitts (88) der letzten Stufe gewinkelt ist, und die zweite äußere ringförmige Wand (70) in Bezug auf die Drehachse (24) in einem zweiten äußeren Winkeldurchschnitt (θ₄) entlang des Tragflächenabschnitts (88) der letzten Stufe gewinkelt ist, die dritte innere ringförmige Wand (62) in Bezug auf die Drehachse (24) in einem dritten inneren Winkeldurchschnitt (α₅) gewinkelt ist, und die dritte äußere ringförmige Wand (74) in Bezug auf die Drehachse (24) in einem dritten äußeren Winkeldurchschnitt (θ₅) entlang des ersten Diffusorabschnitts (92) gewinkelt ist, wobei der erste äußere Winkeldurchschnitt (θ₃) größer ist als der dritte äußere Winkeldurchschnitt (θ₅), der erste innere Winkeldurchschnitt (θ₃) größer ist als der dritte innere Winkeldurchschnitt (α₅), und der dritte äußere Winkeldurchschnitt (θ₅) größer ist als der zweite äußere Winkeldurchschnitt (θ₄).

2. Gasturbine (10) nach Anspruch 1, wobei der erste äußere Winkeldurchschnitt (θ₃) zwischen 2 Grad und 5 Grad größer ist als der dritte äußere Winkeldurchschnitt (θ₅), der erste innere Winkeldurchschnitt (α₃) zwischen 3 Grad und 6 Grad größer ist als der dritte innere Winkeldurchschnitt (α₅), und der dritte äußere Winkeldurchschnitt (θ₅) zwischen 7 Grad und 10 Grad größer ist als der zweite äußere Winkeldurchschnitt (θ₄).

3. Gasturbine (10) nach Anspruch 1, wobei der erste äußere Winkeldurchschnitt (θ₃) 4 Grad größer ist als der dritte äußere Winkeldurchschnitt (θ₅), der erste innere Winkeldurchschnitt (α₃) 5 Grad größer ist als der dritte innere Winkeldurchschnitt (α₅), und der dritte äußere Winkeldurchschnitt (θ₅) 9 Grad größer ist als der zweite äußere Winkeldurchschnitt (θ₄).

4. Gasturbine (10) nach Anspruch 1, wobei der erste äußere Winkeldurchschnitt (θ₃) zwischen 19 Grad und 20 Grad beträgt, der zweite äußere Winkeldurchschnitt (θ₄) zwischen 6 Grad und 8 Grad beträgt, der dritte äußere Winkeldurchschnitt (θ₅) zwischen 15 Grad und 16 Grad beträgt, und der dritte innere Winkeldurschnitt (α₅) weniger als 2 Grad beträgt.

5. Gasturbine (10) nach Anspruch 1, wobei der erste äußere Winkeldurschnitt (θ₃) 19 Grad beträgt, der zweite äußere Winkeldurchschnitt (θ₄) 7 Grad beträgt, der dritte äußere Winkeldurchschnitt (θ₅) 16 Grad beträgt, und der dritte innere Winkeldurchschnitt (α₅) 0 Grad beträgt.

6. Gasturbine (10) nach Anspruch 1, wobei die Turbine (16) weiter einen Düsenabschnitt (84) der letzten Stufe umfasst, der stromaufwärts des Tragflächenabschnitts (88) der letzten Stufe angeordnet ist, und einen Spaltabschnitt (86) zwischen Schaufeln, der unmittelbar stromabwärts des Düsenabschnitts (84) der letzten Stufe und unmittelbar stromaufwärts des Tragflächenabschnitts (88) der letzten Stufe angeordnet ist,
wobei der Düsenabschnitt (84) der letzten Stufe eine Vielzahl von Düsen (96) umfasst, eine vierte innere ringförmige Wand (54), die um die Drehachse (24) der Gasturbine (10) herum angeordnet ist, und eine vierte äußere ringförmige Wand (66), die um die vierte innere ringförmige Wand (54) herum angeordnet ist;
wobei der Spaltabschnitt (86) zwischen Schaufeln eine fünfte innere ringförmige Wand (56) umfasst, die um die Drehachse (24) der Gasturbine (10) herum angeordnet ist, und eine fünfte äußere ringförmige Wand (68), die um die fünfte innere ringförmige Wand (56) herum angeordnet ist;
und wobei der Axial-Radial-Diffusor weiter einen zweiten Diffusorabschnitt (94) umfasst, der unmittelbar stromabwärts des ersten Diffusorabschnitts (92) angeordnet ist, wobei der zweite Diffusorabschnitt eine sechste innere ringförmige Wand (64) umfasst, die um die Drehachse (24) der Gasturbine (10) herum angeordnet ist, und eine sechste äußere ringförmige Wand (76), die um die sechste innere ringförmige Wand (64) herum angeordnet ist;
wobei die vierte innere ringförmige Wand (54) in Bezug auf die Drehachse (24) in einem vierten inneren Winkeldurchschnitt (α₁) gewinkelt ist, die vierte äußere ringförmige Wand (66) in Bezug auf die Drehachse (24) in einem vierten äußeren Winkeldurchschnitt (θ₁) entlang des Düsenabschnitts (84) der letzten Stufe gewinkelt ist, die fünfte innere ringförmige Wand (56) in Bezug auf die Drehachse (24) in einem fünften inneren Winkeldurchschnitt (α₂) gewinkelt ist, die fünfte äußere ringförmige Wand (68) in Bezug auf die Drehachse (24) in einem fünften äußeren Winkeldurchschnitt (θ₂) entlang des Spaltabschnitts (86) zwischen Schaufeln gewinkelt ist; die sechste innere ringförmige Wand (64) in Bezug auf die Drehachse (24) in einem sechsten inneren Winkeldurchschnitt (α₆) gewinkelt ist, und die sechste äußere ringförmige Wand (76) in Bezug auf die Drehachse (24) in einem sechsten äußeren Winkeldurchschnitt (θ₆) entlang des zweiten Diffusorabschnitts (76) gewinkelt ist.

7. Gasturbine (10) nach Anspruch 6, wobei der vierte äußere Winkeldurchschnitt (θ₁) zwischen 15 Grad und 17 Grad beträgt, der fünfte äußere Winkeldurchschnitt (θ₂) zwischen 14 Grad und 16 Grad beträgt, der sechste äußere Winkeldurchschnitt (θ₆) zwischen 7 Grad und 9 Grad beträgt, der vierte innere Winkeldurchschnitt (α₁) zwischen 4 Grad und 6 Grad beträgt, der fünfte innere Winkeldurchschnitt (α₂) zwischen 4 Grad und 5 Grad beträgt, der erste innere Winkeldurchschnitt (α₃) zwischen 4 Grad und 5 Grad beträgt, und der sechste innere Winkeldurchschnitt (α₆) weniger als 2 Grad beträgt.

8. Gasturbine nach Anspruch 6, wobei der vierte äußere Winkeldurchschnitt (θ₁) 16 Grad beträgt, der fünfte äußere Winkeldurchschnitt (θ₂) 15 Grad beträgt, der sechste äußere Winkeldurchschnitt (θ₆) 8 Grad beträgt, der vierte innere Winkeldurchschnitt (α₁) 5 Grad beträgt, der fünfte innere Winkeldurchschnitt (α₂) 5 Grad beträgt, der erste innere Winkeldurchschnitt (α₃) 5 Grad beträgt, und der sechste innere Winkeldurchschnitt (α₆) 0 Grad beträgt.

## Revendications

1. Turbine à gaz (10) comprenant une turbine (16) et un diffuseur axial-radial (18),
la turbine (16) comprenant une section de profil aérodynamique de dernier étage (88),
la section de profil aérodynamique de dernier étage (88) comprend une première paroi annulaire interne (58) disposée autour d'un axe de rotation (24) de la turbine à gaz (10), une pluralité de profils aérodynamiques (100), chaque profil aérodynamique comprenant une extrémité proximale (98) couplée à la première paroi annulaire interne (58) et s'étendant vers l'extérieur dans une direction radiale vers un embout (102) disposé à une extrémité distale, dans laquelle un renfort d'embout est disposé à l'embout, lequel renfort d'embout comprend une première paroi annulaire externe disposée sur la première paroi annulaire interne et couplée aux extrémités distales de chacun de la pluralité des profils aérodynamiques (100),
la section de profil aérodynamique de dernier étage (88) comprenant en outre un renfort stationnaire (52) comprenant une deuxième paroi annulaire externe (70) disposée sur la première paroi annulaire interne (58) et la deuxième paroi annulaire externe (102) ;
le diffuseur axial-radial (18) comprenant une première section de diffuseur (92), dans lequel la première section de diffuseur comprend une troisième paroi annulaire interne (62) disposée autour de l'axe de rotation (24) de la turbine à gaz (10) et une troisième paroi annulaire externe (74) disposée autour de la troisième paroi annulaire interne (62),
dans lequel la première section de diffuseur (92) est disposée immédiatement en aval du dernier étage de profil aérodynamique (28),
**caractérisé en ce que** la première paroi annulaire interne (58) fait un angle avec l'axe de rotation (24) dans une première moyenne d'angle interne (α₃), la première paroi annulaire externe fait un angle par rapport à l'axe de rotation (24) dans une première moyenne d'angle externe (θ₃) le long de la section de profil aérodynamique de dernier étage (88) et la deuxième paroi annulaire externe (70) fait un angle par rapport à l'axe de rotation (24) dans une deuxième moyenne d'angle externe (θ₄) le long de la section de profil aérodynamique de dernier étage (88), la troisième paroi annulaire interne (62) fait un angle par rapport à l'axe de rotation (24) dans une troisième moyenne d'angle interne (α₅) et la troisième paroi externe (74) fait un angle par rapport à l'axe de rotation (24) dans une troisième moyenne d'angle externe (θ₅) le long de la première section de diffuseur (92), dans lequel la première moyenne d'angle externe (θ₃) est supérieure à la troisième moyenne d'angle externe (θ₅), la première moyenne d'angle interne (α₃) est supérieure à la troisième moyenne d'angle interne (α₅) et la troisième moyenne d'angle externe (θ₅) est supérieure à la deuxième moyenne d'angle externe (θ₄).

2. Turbine à gaz (10) selon la revendication 1, dans laquelle la première moyenne d'angle externe (θ₃) est entre 2 degrés et 5 degrés supérieure à la troisième moyenne d'angle externe (θ₃), la première moyenne d'angle interne (α₃) est entre 3 degrés et 6 degrés supérieure à la troisième moyenne d'angle interne (α₅) et la troisième moyenne d'angle externe (θ₅) est entre 7 degrés et 10 degrés supérieure à la deuxième moyenne d'angle externe (θ₄).

3. Turbine à gaz (10) selon la revendication 1, dans laquelle la première moyenne d'angle externe (θ₃) est de 4 degrés supérieure à la troisième moyenne d'angle externe (θ₅), la première moyenne d'angle interne (α₃) est de 5 degrés supérieure à la troisième moyenne d'angle interne (α₅) et la troisième moyenne d'angle externe (θ₅) est de 9 degrés supérieure à la deuxième moyenne d'angle externe (θ₄).

4. Turbine à gaz (10) selon la revendication 1, dans laquelle la première moyenne d'angle externe (θ₃) est comprise entre 19 degrés et 20 degrés, la deuxième moyenne d'angle externe (θ₄) est comprise entre 6 degrés et 8 degrés, la troisième moyenne d'angle externe (θ₅) est comprise entre 15 degrés et 16 degrés et la troisième moyenne d'angle interne (α₅) est inférieure à 2 degrés.

5. Turbine à gaz (10) selon la revendication 1, dans laquelle la première moyenne d'angle externe (θ₃) est de 19 degrés, la deuxième moyenne d'angle externe (θ₄) est de 7 degrés, la troisième moyenne d'angle externe (θ₅) est de 16 degrés et la troisième moyenne d'angle interne (α₅) est de 0 degré.

6. Turbine à gaz (10) selon la revendication 1, dans laquelle la turbine (16) comprend en outre une section de tuyère de dernier étage (84) disposée en amont de la section de profil aérodynamique de dernier étage (88) et une section d'espacement entre pales
disposée immédiatement en aval de la section de tuyère de dernier étage (84) et immédiatement en amont de la section de profil aérodynamique de dernier étage (88),
la section de tuyère de dernier étage (84) comprenant une pluralité de tuyères (96), une quatrième paroi annulaire interne (54) disposée autour de l'axe de rotation (24) de la turbine à gaz (10) et une quatrième paroi annulaire externe (66) disposée autour de la quatrième paroi annulaire interne (54) ;
la section d'intervalle entre pales (86) comprenant une cinquième paroi annulaire interne (56) disposée autour de l'axe de rotation (24) de la turbine à gaz (10) et une cinquième paroi annulaire externe (68) disposée autour de la cinquième paroi annulaire interne (56) ;
et dans laquelle, en outre, le diffuseur axial-radial comprend une seconde section de diffuseur (94) disposée immédiatement en aval de la première section de diffuseur (92), la seconde section de diffuseur comprenant une sixième paroi annulaire interne (64) disposée autour de l'axe de rotation (24) de la turbine à gaz (10) et une sixième paroi annulaire externe (76) disposée autour de la sixième paroi annulaire interne (64) ;
dans laquelle la quatrième paroi annulaire interne (54) fait un angle par rapport à l'axe de rotation (24) dans une quatrième moyenne d'angle interne (α₁), la quatrième paroi annulaire externe (66) fait un angle par rapport à l'axe de rotation (24) dans une quatrième moyenne d'angle externe (θ₁) le long de la section de buse de dernier étage (84), la cinquième paroi annulaire interne (56) fait un angle par rapport à l'axe de rotation (24) dans une cinquième moyenne d'angle interne (α₂), la cinquième paroi annulaire externe (68) fait un angle par rapport à l'axe de rotation (24) dans une cinquième moyenne d'angle externe (θ₂) le long de la section d'intervalle entre pales (86) ; la sixième paroi annulaire interne (64) fait un angle par rapport à l'axe de rotation (24) dans une sixième moyenne d'angle interne (α₆) et la sixième paroi annulaire externe (76) fait un angle par rapport à l'axe de rotation (24) dans une sixième moyenne d'angle externe (θ₆) le long de la seconde section de diffuseur (76).

7. Turbine à gaz (10) selon la revendication 6, dans laquelle la quatrième moyenne d'angle externe (θ₁) se situe entre 15 degrés et 17 degrés, la cinquième moyenne d'angle externe (θ₂) se situe entre 14 degrés et 16 degrés, la sixième moyenne d'angle externe (θ₆) se situe entre 7 degrés et 9 degrés, la quatrième moyenne d'angle interne (α₁) se situe entre 4 degrés et 6 degrés, la cinquième moyenne d'angle interne (α₂) se situe entre 4 degrés et 5 degrés, la sixième moyenne d'angle interne (α₃) se situe entre 4 degrés et 5 degrés et la sixième moyenne d'angle interne (α₆) est inférieure à 2 degrés.

8. Turbine à gaz selon la revendication 6, dans laquelle la quatrième moyenne d'angle externe (θ₁) est de 16 degrés, la cinquième moyenne d'angle externe (θ₂) est de 15 degrés, la sixième moyenne d'angle externe (θ₆) est de 8 degrés, la quatrième moyenne d'angle interne (α₁) est de 5 degrés, la cinquième moyenne d'angle interne (α₂) est de 5 degrés, la première moyenne d'angle interne (α₃) est de 5 degrés et la sixième moyenne d'angle interne (α₆) est de 0 degré.
